# FASCICULE DE BREVET EUROPEEN

(11) **EP 2 583 284 B1**
(45) Date de publication et mention de la délivrance du brevet: **16.07.2014**
(21) Numéro de dépôt: 11725107.4
(22) Date de dépôt: 16.06.2011
(51) Int. Cl.: G21C 7/08, G21C 7/10, G21C 21/18

(54) **JOINT D'INTERFACE SOLIDE A POROSITE OUVERTE POUR UNE BARRE DE COMMANDE NUCLEAIRE**
FESTE ÜBERGANGSFUGE MIT OFFENER POROSITÄT FÜR EINEN KERNREGELSTAB
SOLID INTERFACE JOINT WITH OPEN POROSITY FOR A NUCLEAR CONTROL ROD

(30) Priorité: 16.06.2010 FR 1054781
(43) Date de publication de la demande: 24.04.2013
(73) Titulaire: Commissariat à l'Énergie Atomique et aux Énergies Alternatives, 75015 Paris (FR)
(72) Inventeur: ZABIEGO, Maxime, F-04860 Pierrevert (FR); DAVID, Patrick, F-37540 Saint Cyr Sur Loire (FR); RAVENET, Alain, F-83560 Vinon Sur Verdon (FR); ROCHAIS, Denis, F-37550 Saint-Avertin (FR)
(74) Mandataire: Ilgart, Jean-Christophe
(86) Numéro de dépôt international: PCT/EP2011/060001
(87) Numéro de publication internationale: WO 2011/157782

(56) Documents cités:
- EP-A1- 0 158 812
- FR-A1- 2 769 621
- JP-A- 2004 245 677
- US-A- 4 172 762

## Description

### DOMAINE TECHNIQUE

La présente invention se rapporte à l'interface entre l'empilement de pastilles et la gaine les entourant, dans une barre de commande nucléaire utilisée dans un réacteur nucléaire.

Les applications visées pour l'invention sont aussi bien :
- les réacteurs nucléaires à neutrons rapides (RNR) refroidis au gaz (RNR-gaz) dits de IV^{ème} génération, dont le fonctionnement est assuré avec un caloporteur sous forme de gaz tel que l'hélium pressurisé, avec des crayons de combustible nucléaire à gaine en matériau composite à matrice céramique (CMC), et des pastilles de combustible de type carbure mixte d'uranium et de plutonium [9],
- les réacteurs nucléaires à neutrons rapides fonctionnant avec un caloporteur sodium (RNR-Na) [12],
- les réacteurs nucléaires à eau pressurisée (REP) [3] ou à eau bouillante (REB).

L'invention concerne les barres de commande des réacteurs de puissance dans lesquelles les pastilles sont en matériau absorbant neutronique en B₄C [8], [5].

Par « réacteurs nucléaires », dans l'ensemble de la demande, on comprend le sens usuel du terme à ce jour, à savoir des centrales de production d'énergie à partir des réactions de fission nucléaires utilisant des éléments combustibles dans lesquels se produisent les fissions qui libèrent la puissance calorifique, cette dernière étant extraite des éléments par échange thermique avec un fluide caloporteur qui assure leur refroidissement.

Par « barre de commande nucléaire » (on utilisera aussi le terme « élément absorbant »), dans l'ensemble de la demande, on comprend le sens officiel défini par exemple, dans le dictionnaire des Sciences et Techniques nucléaires, à savoir une barre ou tige contenant une matière absorbant les neutrons et qui selon sa position dans un coeur de réacteur nucléaire influe sur sa réactivité.

### ART ANTÉRIEUR

Différents types de barres de commande existent en fonction des conditions de fonctionnement et des performances des réacteurs nucléaires.

Les principales fonctionnalités auxquelles doit répondre une barre de commande nucléaire sont :
- permettre une absorption contrôlée de neutrons, par des réactions nucléaires, ce qui implique des contraintes de performances (densité de noyaux absorbants) et de sûreté (stabilité géométrique nécessaire à la maîtrise de la réactivité nucléaire et du refroidissement),
- garantir une extraction contrôlée de l'énergie dégagée par les réactions nucléaires, ce qui implique des contraintes de performances (limitation des barrières thermiques susceptible de dégrader les transferts vers le caloporteur) et de sûreté (intégrité du canal caloporteur, marge vis-à-vis de la fusion de l'absorbant, limitation des gradients thermiques sources de dilatations différentielles susceptibles de conduire à un chargement mécanique excessif des structures...) .

Les éléments absorbants classiquement rencontrés dans les installations nucléaires peuvent être classés en fonction de leur géométrie comme suit:
- cylindres : aiguilles des barres de commande des réacteurs RNR ou des réacteurs REP, par exemple,
- plaques: pour les barres de commande des réacteurs à eau bouillante (REB), par exemple.

L'invention concerne exclusivement les barres de commande nucléaire à géométrie cylindrique et à section circulaire dans lesquels des pastilles d'absorbant neutronique B₄C, cylindriques à section transversale circulaire sont empilées dans une gaine tubulaire étanche présentant à l'une de ses extrémités une zone dépourvue de pastilles, que l'on appelle vase d'expansion, qui sert à accommoder l'allongement de la colonne de pastilles sous irradiation du fait des phénomènes de gonflement qui sont induit par les réactions nucléaires. Dans cette configuration cylindrique, il y a une interface entre la colonne de pastilles empilées et la gaine. Cette interface peut jusqu'à présent être réduite au montage uniquement à une surface de contact ou correspondre à un jeu fonctionnel qui peut alors consister en un ou plusieurs matériaux sous forme gazeuse, liquide, de couches comme expliqué par la suite.

Les inventeurs ont fait l'inventaire des fonctions que doit remplir cette interface dans un élément absorbant. Elles sont indiquées ci-dessous.

### Fonctions primaires :

f1/ gérer le découplage mécanique entre les pastilles d'absorbant et la gaine, de façon à limiter l'interaction mécanique entre les pastilles et la gaine (désignée par la suite par IMPG), en permettant une expansion libre de la colonne de pastilles empilées, selon une direction radiale et selon une direction axiale,
f2/ permettre le transport des produits gazeux issus des réactions d'absorption neutronique (hélium et tritium, dans le cas de pastilles en B4C), relâchés par l'élément absorbant, jusqu'au vase d'expansion situé en extrémité axiale de la barre de commande ou aux évents ménagés dans le gainage de la barre de commande pour relâcher ces gaz dans le circuit primaire (dont ils sont ensuite éliminés par des boucles d'épuration dédiées),
f3/ gérer le couplage thermique entre l'absorbant et la gaine :
   i. en garantissant la minimisation des barrières thermiques, notamment dans la direction radiale, afin d'éviter tout échauffement excessif de l'absorbant,
   ii. en garantissant la continuité de cette fonction, notamment dans les directions axiale et azimutale, afin de minimiser les hétérogénéités thermiques, sources de dilatations différentielles susceptibles d'induire notamment des chargements mécaniques importants au niveau de la gaine.

### Fonctions induites par l'environnement :

f4/ assurer les fonctions primaires (f1 à f3) en minimisant l'impact neutronique de l'interface, de manière à préserver les performances du coeur du réacteur:
   i. en minimisant l'encombrement géométrique,
   ii. en ayant recours à des matériaux présentant éventuellement une forte section efficace d'interaction avec les neutrons.
f5/ assurer les fonctions primaires (f1 à f3) en garantissant la compatibilité chimique de l'interface avec son environnement:
   i. en garantissant la compatibilité chimique de l'interface avec la gaine (pas d'accroissement d'une cinétique à haute température, en situation accidentelle, par exemple),
   ii. en garantissant la compatibilité chimique de l'interface avec l'absorbant (absence d'eutectique à « basse température » susceptible de réduire la marge à la fusion de l'absorbant, par exemple).

### Fonctions secondaires :

f6/ limiter le transfert de constituants de l'absorbant (carbone, notamment, pour des pastilles B₄C) vers la gaine, afin de prévenir le risque de corrosion interne, potentiellement fragilisant, qui est susceptible d'en résulter: il s'agit d'une fonction liée à la fonction primaire f1,
f7/ optimiser le centrage absorbant/gaine de manière à minimiser les hétérogénéités thermiques génératrices de points chauds et de chargements mécaniques accrus au niveau de la gaine: il s'agit d'une fonction secondaire liée aux fonctions primaires f1 et f3,
f8/ minimiser (sans l'introduire lui-même) le risque de délocalisation d'éclats d'absorbant dans le jeu éventuel entre absorbant et gaine, susceptible de conduire à un défaut d'intégrité de la gaine par ovalisation et/ou poinçonnement de celle-ci lors de la réduction de ce jeu sous l'effet des déformations différentielles (dilatation thermique et gonflement): il s'agit d'une fonction liée à la fonction primaire f1. Dans le cas d'une barre de commande, les fonctions f1 et f8 sont éventuellement indissociables : contrairement à un élément combustible, une barre de commande peut posséder des dimensions radiales importantes (c'est généralement le cas pour les RNR, mais pas nécessairement pour les REP) qui font qu'un jeu pastille/gaine conséquent est alors nécessaire, ce qui accroit ainsi le risque qu'un éclat de pastille vienne s'y loger, de sorte que la gestion des éclats de pastille se pose de manière aiguë pour assurer l'intégrité de la gaine vis-à-vis des chargement mécaniques.

### Fonctions annexes :

f9/ satisfaire les contraintes économiques usuelles :
   i. durée de vie : remplir les fonctions primaires et secondaires sur une durée d'exploitation de l'absorbant compatible avec les performances économiques visées,
   ii. capacité d'approvisionnement des matériaux et de mise en oeuvre des procédés de fabrication,
   iii. coût.
      f10/ exclure toute pénalité significative vis-à-vis de la sûreté en situation accidentelle (réactivité chimique de l'interface avec les matériaux de structure du coeur en phase de dégradation avancée de celui-ci, par exemple),
      f11/ minimiser les problèmes techniques de fabricabilité, notamment la mise en oeuvre du procédé d'assemblage de l'élément absorbant (absorbant, interface et gaine),
      f12/ satisfaire, avec des contraintes minimales, les exigences en aval du cycle de réaction nucléaire que sont la séparation et le recyclage.

Dans les barres de commande à géométrie cylindrique et à section circulaire, l'interface entre pastilles et gaine est sous forme d'un gaz, typiquement de l'hélium ou sous forme de sodium pour un réacteur RNR-Na, qui présente des propriétés optimales (parmi les gaz possibles) vis-à-vis de la conductivité thermique (fonction f3.i), de la neutralité chimique (fonction f5 et des fonctions annexes (fonctions f9 à f12). Les fonctions de découplage mécanique entre pastilles de combustible et gaine (fonction f1) et de transport des gaz vers le vase d'expansion et/ou les éventuels évents (fonction f2) sont idéalement remplies par une interface sous forme gazeuse, dans la mesure où l'on provisionne, à la fabrication, un jeu fonctionnel suffisant entre pastilles et gaine pour éviter tout comblement sous irradiation, lié aux déformations différentielles de l'absorbant et de la gaine [6].

Toutefois, une barre de commande à géométrie cylindrique à section circulaire et à interface sous forme gazeuse, présente un antagonisme car elle ne peut remplir à la fois les fonctions f1 et f2, d'une part, et les fonctions f3.i et f4.i, d'autre part, que dans des limites très strictes de performances. En effet, au-delà des contraintes d'encombrement qui nuisent aux performances neutroniques (densité de matière absorbante dans l'élément absorbant), la conductivité thermique de l'interface gazeuse étant relativement médiocre, tout accroissement du jeu fonctionnel au montage entre pastilles et gaine induit le renforcement de la barrière thermique qu'il constitue, conduisant à des températures accrues de l'absorbant. Outre le fait que l'augmentation de température s'effectue au détriment des exigences de sûreté (réduction de la marge à la fusion de l'absorbant, notamment), elle s'accompagne d'un accroissement du taux d'expansion volumique de la pastille qui favorise le rattrapage dudit jeu sous irradiation, ce qui réduit ainsi l'efficacité de l'accroissement de l'épaisseur de l'interface et par là, l'augmentation de la durée de vie de l'élément absorbant.

Afin d'atténuer cette pénalité thermique, une solution a été proposée dans le brevet JP 11183674 (appliqué à un élément combustible, mais de manière identique à ce qui se fait par ailleurs sur des barres de commande) et expérimentée dans divers programmes d'irradiations expérimentales [10], [11]. Cette solution consiste à réaliser l'interface non plus sous forme de gaz mais sous forme d'un métal à bas point de fusion, liquide aux conditions de fonctionnement de l'élément combustible: le sodium, notamment. La conductivité accrue du métal, par rapport au gaz, permet ainsi d'atténuer considérablement les problématiques liées à la conductance de l'interface, qui contribue alors de manière négligeable au bilan thermique de l'élément combustible/absorbant et donne ainsi potentiellement accès à des épaisseurs d'interface plus importantes.

Un avantage supplémentaire de l'interface sous forme d'un métal liquide est d'atténuer, par sa bonne conductivité thermique, les problèmes d'hétérogénéité thermique circonférentielle découlant d'un éventuel excentrement de la pastille de combustible/absorbant par rapport à la gaine. En effet, l'exigence de concentricité (fonction f7) n'est à priori pas garantie par une interface sous forme de gaz ou de métal liquide, en raison de l'absence de rigidité propre de ceux-ci. Aussi, tout excentrement implique que le flux de chaleur est hétérogène sur la circonférence. Les conséquences de cette hétérogénéité thermique (point chaud au niveau de la gaine et chargement mécanique induit par les déformations différentielles d'origine thermique) sont ainsi atténuées lorsque l'interface est sous forme métallique liquide du fait des meilleurs transferts thermiques entre le métal liquide et la gaine d'une part et les pastilles d'autre part.

Toutefois, l'interface sous forme de métal liquide n'est pas sans poser quelques problèmes.

En premier lieu, la compatibilité avec l'environnement (fonction f5, pour les aspects chimiques, par exemple) s'avère très limitante. Ainsi, dans le cas du sodium, qui s'applique naturellement en RNR-Na, il y a clairement incompatibilité avec un caloporteur eau (REP), ainsi qu'avec un réacteur fonctionnant à haute température et conduisant de fait à une marge insuffisante (voire inexistante, dans le cas du RNR-G, par exemple) vis-à-vis du risque d'ébullition du sodium (le sodium boue pour une température de l'ordre de 880°C).

En ce qui concerne les hétérogénéités thermiques (fonction f3.ii), il est clair que toute discontinuité dans l'interface, induite par la présence de bulles de gaz dans le métal liquide (bulles formées à la fabrication ou par les gaz de fission relâchés sous irradiation), conduirait à une remise en cause des bénéfices thermiques de cette solution : ce problème a été constaté lors d'irradiations expérimentales, au cours desquelles il a été observé qu'il est susceptible de conduire à une fin de vie prématurée de l'élément de combustible/absorbant par une rupture prématurée de la gaine [11]. Par ailleurs, en ce qui concerne la limitation de transferts des constituants de combustible/absorbant (fonction f6), il a été observé, dans des irradiations expérimentales de combustibles en carbure dans des réacteurs de type RNR-Na, visant à comparer le comportement des interfaces en hélium et en sodium, que le métal liquide favorise la fragilisation de la gaine, via une carburation de celle-ci induite par le transfert accru du carbone provenant du combustible à travers le sodium, alors que ce problème ne semble pas se poser à travers l'hélium [11], sauf en cas de contact pastille/gaine par excentrement. Pour une barre de commande mettant en oeuvre un absorbant en B₄C, un gainage à base d'acier et un joint sodium, on retrouve une problématique similaire de fragilisation de la gaine par décarburation des pastilles d'absorbant, migration du carbone libre à travers le canal sodium et attaque thermochimique de la face interne de la gaine [8]. Enfin, en ce qui concerne la fonction f8, l'absence de rigidité propre du joint permet la délocalisation d'éclats de combustible/absorbant qui, s'ils viennent se positionner dans l'interface, sont susceptibles de conduire à une ovalisation, voire un poinçonnement, de la gaine, par compression de l'éclat entre pastilles et gaine en cours d'irradiation. Un tel poinçonnement implique une perte prématurée de la fonction de sûreté d'intégrité/étanchéité de la gaine, tandis qu'une ovalisation dégrade les performances en ce qu'elle affecte les échanges thermiques et les interactions mécaniques éventuelles entre éléments combustibles/absorbants voisins. En pratique, le retour d'expérience des irradiations d'éléments combustibles indique qu'un jeu fonctionnel radial entre pastilles et gaine d'une valeur initiale inférieure à environ 4% du rayon des pastilles permet de minimiser le risque de rupture de gaine par poinçonnement, en limitant la probabilité de délocalisation d'un éclat de pastille dans l'interface [13]. Cette limite, rendue nécessaire par les exigences de sûreté, s'avère toutefois être relativement pénalisante vis-à-vis de la durée de fonctionnement de l'élément combustible/absorbant, dans la mesure où elle réduit substantiellement la durée de fonctionnement sans IMPG. De fait, toute exploitation durable d'un combustible/absorbant dans un réacteur nucléaire, nécessaire à ses performances économiques, implique, dans ce contexte, qu'un fonctionnement en IMPG soit inévitable pendant une période plus ou moins longue précédant la fin de vie. Pour un absorbant en B₄C, qui est caractérisé par un taux de gonflement particulièrement important, on doit, pour retarder l'IMPG, provisionner des jeux pastille/gaine très significatifs à la fabrication : typiquement au-delà de 10% du rayon des pastilles dans les RNR-Na, par exemple, donc au-delà des 4% mentionnés ci-dessus, ce qui est d'autant plus critique que le diamètre d'une barre de commande est, dans le cas des réacteur à spectre rapide tout au moins, potentiellement plus grand que celui d'un élément combustible : pour SUPERPHENIX [8], par exemple, les pastilles d'absorbant ont un diamètre de 17.4 mm, à comparer à de l'ordre de 7 mm pour les pastilles de combustible. On est donc particulièrement exposé au risque de relocalisation d'un éclat de pastille dans le jeu pastille/gaine, en réponse à quoi un système de chemise a été mis en place pour contenir ces éclats [8]. Diverses solutions ont été proposées pour permettre un fonctionnement en IMPG acceptable vis-à-vis des exigences de performances économique et de sûreté.

Elles visent à répondre à deux difficultés résiduelles que ni l'interface sous forme gazeuse ni celle sous forme de métal liquide ne permettent de résoudre individuellement, à savoir :
- la nécessité de réduire le chargement mécanique imposé à la gaine en situation de contact avec l'absorbant,
- la minimisation de la fragilisation de la gaine par les agressions thermochimiques.

Toutes les solutions proposées consistent à déposer une ou plusieurs couches intermédiaires de matériaux en tant que tout ou partie d'interface.

Le brevet GB 1187929 propose pour une aiguille combustible d'un réacteur RNR à gaine métallique, fonctionnant à une température d'au moins 700°C, la mise en oeuvre d'une couche intermédiaire, entre pastilles de combustible et gaine, à base d'uranium métallique. Il est fait mention dans ce brevet :
- d'un contact intime entre la couche intermédiaire et la gaine,
- d'une autre partie d'interface à fonction thermique, typiquement en sodium, entre la couche intermédiaire et la gaine,
- d'une couche supplémentaire à fonction de compatibilité chimique, typiquement de l'alumine, entre la couche intermédiaire et la gaine,
- de sillons formant des zones de vide entre le combustible et la couche intermédiaire,
- de la possibilité que la couche intermédiaire et/ou la pastille combustible présente une porosité lui/leur conférant une densité au plus égale à 85% de sa/leur densité théorique,
- d'alliage d'uranium, ou d'alliage d'uranium et de molybdène en tant que constituant de la couche intermédiaire.

Des solutions analogues ont été proposées pour des crayons de combustible à gaine à base de zirconium utilisées dans les réacteurs REP.

Ainsi, le brevet US4818477 propose de réaliser un revêtement à base de poisons neutroniques consommables (borure enrichi en ¹⁰B), recouvrant les pastilles combustibles sur une épaisseur de 10µm à 100µm, de manière à atténuer l'IMPG.

Le brevet US 3969186 propose de réaliser un liner métallique, déposé sur la face interne de la gaine, de manière à prévenir le risque de perforation ou de rupture de la gaine, induit par la fissuration par corrosion sous contrainte et/ou l'interaction mécanique IMPG.

Le brevet US 4783311 propose de réaliser une combinaison de revêtements sur la face interne de la gaine (épaisseur de 4µm à 50 µm) et à la surface des pastilles combustibles (épaisseur de 10µm à 200µm), le revêtement en face interne de la gaine, dans un matériau tel que le graphite, assurant notamment un rôle de « lubrifiant ».

Le brevet JP 3068895A propose de réaliser une couche intermédiaire ductile et dotée de sillons, permettant d'absorber les contraintes induites par une éventuelle IMPG, la couche étant déformable plastiquement évitant par là la propagation de fissures en face interne de gaine.

On peut citer aussi les particules de combustible à géométrie sphérique utilisées dans des réacteurs RHT, telles que décrites dans la demande de brevet international WO2009079068. Comme décrit dans cette demande, une structure multicouches est réalisée, avec une bille de combustible au centre et une gaine autour assurant à la fois les fonctions d'intégrité mécanique et d'étanchéité, aux gaz de fission de la bille combustible, et entre lesquelles une couche en pyrocarbone poreux à fonction tampon est déposée afin de ménager un volume d'expansion pour les gaz de fission et la bille de combustible.

Par ailleurs, la problématique des barres de commande nucléaires à géométrie cylindrique et section circulaire a déjà englobé la délocalisation d'éclats d'absorbant neutronique dans l'interface entre pastilles et gaine (fonction f8), comme décrit dans le retour d'expérience important sur l'usage du matériau B₄C dans les réacteurs RNR-Na [8]. Sous l'effet du gonflement induit par la production d'hélium par absorption neutronique sur le ¹⁰B, la pastille d'absorbant se fragmente. Elle libère ainsi des micro-fragments qui viennent combler l'interface entre pastilles et gaine et accélérer de fait l'IMPG, avec un chargement mécanique de la gaine qui conduit rapidement à un endommagement inacceptable. Une solution consistant à placer les pastilles d'absorbant dans une chemise métallique de faible épaisseur a été mise en oeuvre [8]: elle permet de confiner les fragments de pastille (y compris en situation de rupture de la chemise), et de prolonger ainsi la durée de vie de la barre de commande, dans certaines limites.

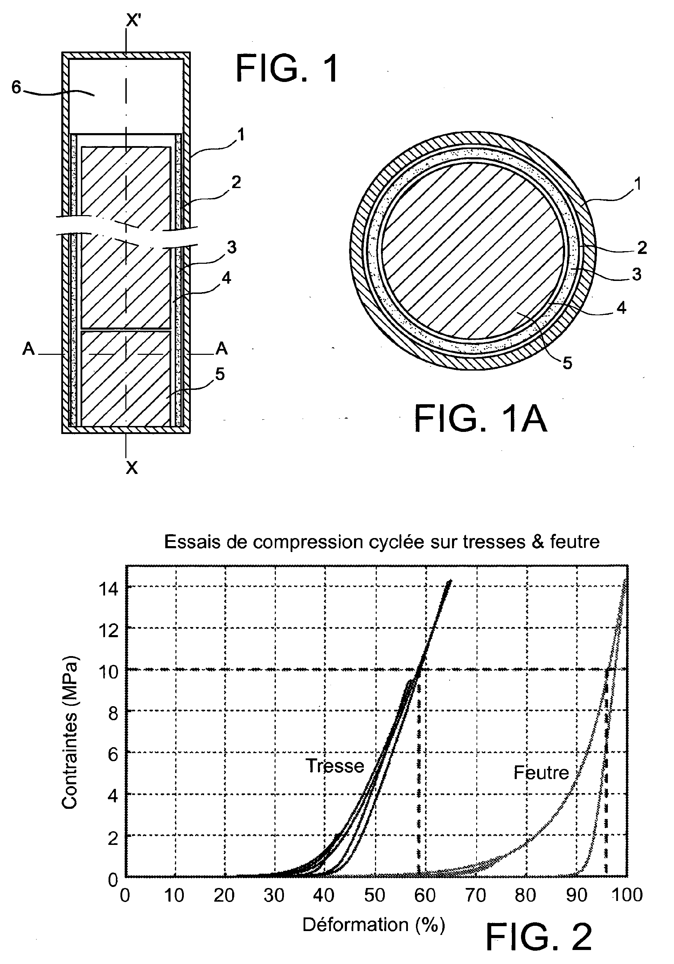

Le brevet US 4235673 divulgue l'utilisation d'une chemise, soit sous la forme d'un tissu de fils métalliques (mode de réalisation des figures 1 et 2) soit sous la forme de rubans métalliques (mode de réalisation des figures 3 et 4), enroulée de manière hélicoïdale autour de la colonne de pastilles de combustible, solidarisée à des éléments de fermeture aux extrémités de la colonne de pastilles de combustible et qui est insérée entre cette dernière et la gaine. Cette solution technologique de chemise selon ce brevet US 4235673 vise exclusivement à confiner des fragments ou éclats de pastilles susceptibles d'être créés. Ainsi, la chemise selon ce brevet US 4235673 a uniquement une fonction de confinement d'éclats de pastilles de combustible et la fonction de transfert thermique entre pastilles et gaine est nécessairement assurée par un fluide de remplissage, tel que le sodium comme explicité par exemple en colonne 4, lignes 23-30 dans ce document et la fonction d'accommodation du gonflement volumique des pastilles est assurée par la présence impérative d'un jeu fonctionnel entre chemise et gaine dimensionné à cet effet, comme cela ressort d'ailleurs explicitement du libellé de la revendication 1 de ce document. Autrement dit, le brevet US 4235673 divulgue une solution d'interface nécessairement mixte entre chemise solidarisée aux extrémités de la colonne de pastilles et liquide de transfert thermique d'épaisseur suffisante entre gaine et colonne de pastilles pour définir un jeu fonctionnel suffisant d'accommodation du gonflement volumique des pastilles. En outre, la solution d'interface mixte selon ce brevet US 4235673 est complexe à mettre en oeuvre et présente des risques de non reproductibilité, du fait de la solidarisation entre chemise et éléments de fermeture aux extrémités de la colonne de pastilles de combustible, qui est donc nécessite une étape supplémentaire lors de la fabrication d'un crayon de combustible en environnement nucléarisé. D'après le brevet US 4235673, cette solution technologique s'applique aux barres de commande nucléaire comme indiqué en colonne 3, ligne 36.

Le brevet FR 2769621 divulgue l'utilisation d'une chemise ou manchon en Sic armé de fibres de Sic inséré entre une colonne de pastilles d'absorbant neutronique, typiquement du B₄C, et la gaine. La solution selon ce brevet FR 2769621 ne peut pas réellement fonctionner : le matériau décrit pour la chemise est l'équivalent d'un composite à matrice céramique CMC. Or, des études réalisées par les inventeurs montrent qu'un tel composite ne peut pas durablement accommoder l'expansion ou gonflement volumique des pastilles empilées. En effet, un CMC présente intrinsèquement une grande raideur (module d'Young de l'ordre de 200 à 300GPa) et une faible ductilité (allongement à rupture inférieur à 1%) qui conduisent rapidement à sa ruine, dès qu'il est mis en situation d'IMPG sous l'effet du gonflement volumique de l'absorbant neutronique. En outre, les épaisseurs de la chemise mentionnées dans ce brevet FR 2769621 impliquent des fractions volumiques d'absorbant neutronique qui sont très inférieures aux valeurs admissibles. Or, réduire la fraction volumique d'absorbant nécessite d'augmenter la teneur en ¹⁰B ce qui a pour inconvénient un coût élevé.

Le brevet JP 2004245677 divulgue l'utilisation d'une chemise métallique faite à partir de fibres, en particulier une tresse insérée entre un empilement de pastilles d'absorbant en carbure de bore B₄C sur toute sa hauteur. Comme pour le brevet US 4235673, cette chemise seule ne peut assurer l'ensemble des fonctions requises pour un joint d'interface pastille/gaine de barre de commande : elle vise essentiellement à confiner les fragments de pastille d'absorbant (fonction f8), mais doit être associée à un fluide de remplissage (métal liquide, tel que le sodium évoqué dans le brevet JP 2004245677) pour satisfaire les fonctions primaires mécanique (fonction f1) et thermique (fonction f3), notamment. De fait, cette solution ne semble guère applicable qu'à des situations ou la chemise proposée baigne dans le sodium, ce qui limite son domaine d'utilisation au RNR-Na, mais semble exclure sa mise en oeuvre en REP ou en RNR-G, par exemple, dans la mesure où ces réacteurs interdisent l'usage du sodium (problème de compatibilité avec le caloporteur en REP et de température d'ébullition en RNR-G).

Enfin, le brevet US 4172262 divulgue l'utilisation d'une pièce métallique (« sleeve » en anglais) insérée entre colonne de pastilles d'absorbant neutronique et gaine, la pièce étant insérée uniquement sur la partie inférieure de la colonne. Le matériau concret proposé dans ce document, à savoir l'acier inoxydable type 347, n'est pas compatible avec les très hautes températures, et le rend donc inapproprié pour des réacteurs RNR-gaz et dans des scénarios accidentels des autres réacteurs.

Le but général de l'invention est donc proposer une interface améliorée entre pastilles et gaine dans une barre de commande nucléaire à géométrie cylindrique et section circulaire qui ne présente pas les inconvénients des interfaces selon l'art antérieur tels qu'exposés ci-dessus.

Un autre but de l'invention est de proposer un procédé de fabrication d'une barre de commande nucléaire à interface pastilles/gaine améliorée, qui ne soit pas en rupture complète avec l'outil industriel mis en place pour fabriquer les barres de commandes nucléaires actuelles à section circulaire.

### EXPOSÉ DE L'INVENTION

Pour ce faire, l'invention a pour objet une barre de commande nucléaire s'étendant selon une direction longitudinale comprenant une pluralité de pastilles, en matériau absorbant les neutrons, empilées les unes sur les autres sous la forme d'une colonne et une gaine entourant la colonne de pastilles, dans laquelle, en section transversale à la direction longitudinale, la gaine et les pastilles ont une section circulaire et dans laquelle un joint d'interface, également de section circulaire en section transversale à la direction longitudinale (XX'), en matériau solide transparent aux neutrons, et présentant une porosité ouverte est inséré entre la gaine et la colonne de pastilles empilées sur au moins la hauteur de cette dernière.

Selon des aspects d'invention, le joint d'interface est une structure, découplée mécaniquement à la fois de la gaine et de la colonne de pastilles, de conductivité thermique élevée et à porosité ouverte, adapté pour se déformer par compression selon son épaisseur de sorte à subir un écrasement sous l'effet du gonflement volumique des pastilles sous irradiation, l'épaisseur initiale du joint et son taux de compression étant tels que le chargement mécanique transmis à la gaine par les pastilles sous irradiation reste inférieur à une valeur seuil prédéterminée.

Par conductivité thermique élevée, on entend un coefficient de conduction thermique suffisamment élevé pour assurer le transfert thermique entre colonne de pastilles d'absorbant B4C et gaine de manière à garantir le maintien de température à coeur des pastilles d'absorbant en deçà de leur point de fusion

L'invention concerne donc un joint d'interface entre les pastilles empilées et la gaine, dont la structure est solide, de forte porosité, de préférence comprise entre 30 et 95% du volume de joint à l'état à froid et qui est adapté pour réaliser les fonctions suivantes jusqu'aux températures de fonctionnement nominal dans les réacteurs nucléaires :
- permettre, par son écrasement, l'expansion radiale des pastilles empilées, d'absorbant neutronique sous irradiation, sans chargement mécanique excessif de la gaine,
- permettre, par des déformations n'impliquant pas de perte de continuité de sa structure, l'accommodation des déformations différentielles axiales entre les pastilles empilées et la gaine les entourant, et ce en température et sous irradiation et sans chargement excessif de la gaine,
- favoriser le transfert de la chaleur produite par les réactions nucléaires au sein des pastilles, vers le caloporteur circulant le long de la gaine, et ce de manière uniforme,
- permettre le transfert des gaz relâchés sous irradiation (hélium et tritium), vers les éventuels évents ménagés dans la gaine et/ou le vase d'expansion situé à l'extrémité de la gaine et dépourvu d'absorbant neutronique,
- assurer une protection de la gaine vis-à-vis des problématiques de compatibilité avec l'absorbant des pastilles, par la rétention des produits relâchés par l'absorbant des pastilles et susceptibles de corroder la gaine.

Le joint d'interface selon l'invention peut être réalisé dans toute barre de commande nucléaire destinée à être utilisée dans des réacteurs dont le caloporteur est soit non pressurisé soit pressurisé (comme pour les réacteurs RNR-G). Dans ce dernier cas, on veille à ce que les gaines utilisées présentent une résistance suffisante à la déformation par fluage pour ne pas venir se plaquer contre les pastilles de combustible en fonctionnement. Typiquement, une gaine en composite à matrice céramique CMC convient parfaitement.

On définit un joint d'interface solide dont la porosité ouverte autorise une expansion volumique des pastilles d'absorbant B₄C de manière durable sans sollicitation mécanique excessive de la gaine, jusqu'à des durées d'irradiation n'imposant pas de contraintes d'arrêt pour rechargement supérieures à celles des éléments combustibles. Par « excessive », on entend une sollicitation, notamment circonférentielle, susceptible de dépasser les limites imposées par les critères usuels de dimensionnement d'une barre de commande nucléaire [14]. On veille par ailleurs à respecter les contraintes thermique (performance et absence de discontinuités), neutronique (capacité éventuelle d'absorption des neutrons et encombrement), ainsi que de transfert des gaz de fission relâchés vers le vase d'expansion.

On peut envisager un (des) matériau(x) du joint d'interface selon l'invention qui contribue(nt) à rendre caduques les interactions non-mécaniques entre l'absorbant et le matériau de gaine. Ainsi, le joint d'interface solide dont les pores ouverts peut piéger tout ou partie des produits relâchés par l'absorbant, qui sont susceptibles de réagir chimiquement avec la gaine, et d'en dégrader ainsi les performances mécaniques (problématique de corrosion sous contrainte, par exemple).

Les porosités ouvertes du joint et les jeux fonctionnels éventuels séparant le joint d'interface des pastilles et/ou de la gaine peuvent être occupés par un gaz, préférentiellement de l'hélium, et/ou par un métal liquide, tel que le sodium.

Du fait de sa consistance (rigidité intrinsèque jusqu'au seuil de chargement mécanique au-delà duquel s'amorce son écrasement), le joint d'interface solide selon l'invention garantit un centrage des pastilles dans la gaine, et empêche toute délocalisation de fragment d'absorbant neutronique B₄C.

Afin de retarder durablement l'IMPG, on peut envisager une épaisseur de joint d'interface solide de plusieurs centaines de microns. On veille de toutes façons à ce que ses propriétés thermiques, prenant en compte le cas échéant celles du gaz et/ou du métal liquide dans lequel il est plongé, qui garantissent une maîtrise de la thermique de l'absorbant neutronique B₄C

On veille à conférer au joint d'interface solide des propriétés mécaniques ad hoc. Ainsi, on veille à ce qu'il présente des capacités de déformation en compression, c'est-à-dire radialement à la direction de la barre de commande, et en cisaillement (selon la circonférence et selon la direction parallèle à l'axe de révolution du crayon ou de la barre) suffisantes pour accommoder les déformations différentielles des pastilles d'absorbant neutronique et de la gaine, sous irradiation, sans induire de chargement mécanique excessif au niveau de la gaine, ni de rupture de continuité axiale et circonférentielle du joint. Ces propriétés mécaniques doivent être garanties sous irradiation, pour des doses pouvant atteindre de l'ordre de 100 dpa-Fe à 200 dpa-Fe (fluences de 2 à 4 10²⁷ n/m²) . En effet, les pastilles d'absorbant neutronique subissent un gonflement volumique, de sorte que leur diamètre et longueur augmentent. La gaine gonflant à priori beaucoup moins que l'absorbant, l'interface entre pastilles et gaine se referme donc au cours de l'irradiation. Par ailleurs, la colonne de pastilles s'allonge beaucoup plus que la gaine, entraînant un cisaillement longitudinal entre eux. Ainsi, on veille à ce que le joint d'interface soit capable de :
- compenser, par sa déformation d'écrasement, la fermeture de l'interface avec une raideur compatible avec la tenue mécanique de la gaine, ce qui exclut la présence de zones localement denses (défauts résultant du procédé de fabrication, densification en irradiation...),
- compenser la déformation de glissement longitudinal entre colonne d'absorbant neutronique et gaine, par son allongement (effet du coefficient de Poisson) consécutif à son écrasement radial et/ou par une déformation de cisaillement (en supposant un accrochage surfacique sur la gaine et/ou sur l'absorbant avec une transmission d'effort axial compatible avec la tenue mécanique de la gaine) ; et/ou par un écoulement visqueux d'extrusion axial dans le jeu sous l'action de sa compression radiale.

Le joint d'interface selon l'invention est réalisé de manière continue sur toute sa hauteur : on cherche de toute manière un compromis de sorte qu'en compensant la déformation de glissement longitudinal ci-dessus, aucune rupture de la continuité axiale du joint n'intervienne.

Enfin, on veille à ce que les modes de déformation du joint ne conduisent pas à sa fragmentation, d'une manière susceptible de conduire à une relocalisation de fragments dans les situations de réouverture partielle de l'interface, typiquement lors d'un arrêt fortuit ou programmé du réacteur, ce qui induirait un risque de poinçonnement ultérieur de la gaine, lors d'une remontée en puissance/température, par exemple.

On veille éventuellement à ce que le(s) matériau(x) à envisager pour le joint d'interface solide soient les plus absorbants possible aux neutrons.

La forte porosité ouverte de la structure, telle que fabriquée, doit favoriser le transport des gaz relâchés vers les éventuels évents ménagés dans la gaine et/ou le vase d'expansion situé en partie haute de l'élément absorbant, avec une efficacité se dégradant aussi peu que possible sous irradiation (l'écrasement de la structure conduisant à une réduction de la porosité totale et du taux de porosités ouvertes).

La surface d'échange importante offerte par la structure doit favoriser la rétention des produits relâchés par l'absorbant sous irradiation (carbone, par exemple, dans le cas du B₄C) et susceptibles de contribuer à la fragilisation de la gaine par corrosion.

Grâce au joint d'interface solide sous la forme d'une structure selon l'invention, on peut envisager d'augmenter son épaisseur par rapport aux épaisseurs d'interface usuellement rencontrées entre pastilles et gaine, et ce, afin de repousser la fin de vie des pastilles en matériau absorbant neutronique B₄C, avec pour conséquence un gain économique appréciable sans remise en cause de la sûreté.

La porosité ouverte du joint d'interface selon l'invention peut avoir un volume au moins égal à 30% du volume total du joint d'interface issu de la fabrication. Préférentiellement, ce volume est compris entre 30% et 95% du volume total du joint d'interface issu de la fabrication et plus préférentiellement compris entre 50% et 85%.

Il va de soi que la porosité et les dimensions géométriques du joint d'interface décrites sont celles du joint d'interface à froid tel qu'il est issu de la fabrication et avant son utilisation dans un réacteur nucléaire.

Il en va de même pour les autres éléments de la barre de commande selon l'invention.

La porosité ouverte visée par l'invention peut être quantifiée par diverses techniques de mesure connues: mesure de densité pour les tresses et fibres, par exemple, ou analyse d'images par tomographie X ou par microscopie optique ou par macroscopie optique, par exemple.

Avantageusement, le joint d'interface présente en section transversale à la direction (XX'), une épaisseur supérieure à au moins 10% du rayon des pastilles.

Le joint d'interface est constitué selon les revendications 1, 2 ou 3.

Pour un réacteur à neutrons rapides refroidi au gaz (RNR-gaz), on peut envisager de préférence le matériau de base de la gaine en un composite à matrice céramique (CMC) réfractaire, tel qu'en SiC-SiC_{f}, éventuellement associé à un liner à base d'alliage métallique réfractaire

Pour un réacteur à neutrons rapides refroidi au sodium (RNR-Na), on peut envisager de préférence la gaine en matériau métallique.

L'invention concerne enfin un procédé de réalisation d'une barre de commande nucléaire selon les revendications 13,18 ou 21.

### BRÈVE DESCRIPTION DES DESSINS

D'autres avantages et caractéristiques de l'invention ressortiront mieux à la lecture de la description détaillée d'une barre de commande nucléaire selon l'invention faite en référence aux figures 1 et 1A suivantes parmi lesquelles :
- la figure 1 est une vue en coupe longitudinale partielle d'un d'une barre de commande nucléaire selon l'invention,
- la figure 1A est une vue en coupe transversale de la barre de commande nucléaire selon la figure 1 ;
- la figure 2 illustre sous forme de courbes des essais de compression par cycles d'un joint d'interface selon l'invention, ce mode de sollicitation étant représentatif d'un fonctionnement sous irradiation en réacteur nucléaire (non stationnaire du fait des variations de puissance).

### EXPOSÉ DÉTAILLÉ DE MODES DE RÉALISATION PARTICULIERS

On précise que l'élément représenté est une barre de commande nucléaire. Cet élément est représenté à froid, c'est-à-dire une fois la fabrication de la barre de commande finie et avant toute utilisation dans un réacteur nucléaire.

La barre de commande selon l'invention comprend, de l'extérieur vers l'intérieur :
- une gaine 1 en matériau(x) métallique(s) ou CMC (matériau(x) composite(s) à matrice céramique), éventuellement revêtue d'un liner sur sa paroi interne,
- un premier jeu 2 de montage (optionnel, dans la mesure où il peut éventuellement être éliminé à la fabrication suite au procédé d'évaporation du liant décrit précédemment),
- un joint 3 solide à porosité ouverte selon l'invention,
- un deuxième jeu 4 de montage (optionnel, dans la mesure où il peut éventuellement être éliminé à la fabrication suite au procédé d'évaporation du liant décrit précédemment),
- un empilement de pastilles 5. en matériau carbure de bore B₄C absorbant neutronique formant une colonne.

Le joint solide à porosité ouverte 3 selon l'invention présente une hauteur supérieure à celle de la colonne de pastilles empilées 5. La différence de hauteur entre le joint solide poreux 3 et la colonne de pastilles empilées est prévue pour garantir que cette dernière reste axialement en regard du joint durant toute la phase d'irradiation en fonctionnement du réacteur nucléaire au cours de laquelle elle subit un allongement par gonflement sous irradiation. Ainsi, d'après [8], l'absorbant du réacteur SUPERPHENIX vise un fonctionnement à 10²² captures par cm³ d'absorbant et par an, et le taux d'allongement par gonflement du B₄C est de l'ordre de 0.05% pour 10²⁰ captures par cm³ d'absorbant, soit un allongement de l'ordre de 5% par année d'irradiation.

Plusieurs types de matériaux peuvent convenir pour la fabrication du joint solide poreux 3 selon l'invention, et avantageusement les structures fibreuses, avec un éventuel dépôt de matrice dans celles-ci, ou les matériaux alvéolaires à porosité ouverte.

Les structures fibreuses pouvant convenir sont des tresses, des feutres, des nappes, des tissus ou des tricots, ou une combinaison de celles-ci, comprenant un pourcentage volumique de fibres d'au moins 15%, voire jusqu'à au moins 5% dans le cas des feutres, avant densification. Les fibres peuvent être des composés céramiques (carbone, carbures, nitrures ou oxydes) ou des composés métalliques (tels que W, alliages W-Re, Mo-Si₂...). Pour réaliser des structures fibreuses qui conviennent en tant que joint poreux 3 selon l'invention, on peut utiliser les techniques classiques de tressage, mise en forme de feutre ou nappage, aiguilletage, tissage ou tricotage [4].

Afin d'augmenter la conductivité thermique du matériau ou de protéger les fibres, on peut envisager le dépôt de composés chimiques également réfractaires (composés céramiques ou métalliques) sur les fibres. Ces dépôts représentent alors un pourcentage en volume tel que le matériau final, structure fibreuse renforcée par un dépôt, possède entre 30 % et 85 % de porosité ouverte, voire jusqu'à 95 % dans le cas des feutres. Ces dépôts sur les structures fibreuses peuvent être réalisés par les techniques classiques de dépôt chimique en phase Vapeur (CVD) [1] ou autres, telles que l'imprégnation de polymère précurseur de céramique, pyrolyse....

Le joint 3 peut être mis en place soit en le positionnant autour des pastilles 5, puis en introduisant l'ensemble joint 3/pastilles 5 dans la gaine 1, soit en l'introduisant dans la gaine 1, les pastilles étant alors introduites par la suite.

Le contact physique entre la gaine 1 et le joint 3 d'une part et entre le joint 3 et les pastilles 5 d'autre part peut être assuré, lors de la montée en température dans le réacteur nucléaire, par la dilatation thermique différentielle, celle du joint 3 étant plus importante. Une autre solution pour assurer ce contact physique est la mise en compression radiale du joint 3 puis, après mise en place de l'ensemble gaine 1-joint 3-pastilles 5, du relâchement du joint 3, avant mise en service dans le réacteur nucléaire pour lequel la barre de commande est destinée.

Les matériaux alvéolaires ou mousses pouvant convenir sont ceux à porosité ouverte, possédant entre 30 % et 85 % de porosité, avec des diamètres de cellules, de préférence inférieurs à 100 µm pour éviter la délocalisation de « macro-fragments » de pastilles mais suffisamment élevés pour assurer une interconnexion des pores. La composition de ces matériaux peut être basée sur des composés céramiques ou métalliques. Pour réaliser des matériaux alvéolaires qui conviennent en tant que joint poreux 3 selon l'invention, on peut utiliser des techniques classiques d'injection de bulles de gaz ou des composés générant des bulles dans le matériau fondu ou un composé précurseur (résine organique pour carbone), la métallurgie des poudres avec des composés ou particules porogènes, le dépôt d'un composé sur une mousse servant de substrat [2],[7]. La mousse de base peut ensuite être renforcée par le dépôt d'un composé de nature identique ou différente (parmi les composés céramiques ou métalliques) de celui de la mousse. Ce dépôt peut être obtenu, par exemple, par dépôt chimique en phase vapeur (CVD) [1].

Trois exemples de barres de commande nucléaire selon l'invention sont donnés ci-après, avec les caractéristiques du système de commande principal (SCP) du réacteur SUPERPHENIX [8] : dans tous ces exemples, la barre de commande comprend un empilement de pastilles d'absorbant neutronique en carbure de bore 5 cylindriques de diamètre de 17.4 mm et une gaine 1 entourant la colonne de pastilles empilées de diamètre intérieur de 19.8 mm, soit un jeu pastille/gaine d'épaisseur radiale de 1.2 mm (à froid).

A titre de comparaison avec la solution de joint qui va être exposée par la suite, pour une barre de commande SCP du réacteur SUPERPHENIX [8], la colonne de pastilles d'absorbant est entourée d'une chemise de 200 µm d'épaisseur assurant le confinement des fragments de pastille formés sous irradiation, et l'espace pastille/gaine résiduel est rempli de sodium liquide assurant un transfert thermique efficace. La fin de vie d'une telle barre de commande est notamment associée à l'occurrence d'une situation d'IMPG, lorsque l'expansion volumique des pastilles de B₄C finit par combler l'espace radial libre séparant initialement la colonne de pastilles de la gaine, conduisant à une chargement mécanique rapidement rédhibitoire de la gaine. L'épaisseur de la chemise (200 µm) devant être naturellement soustraite de l'épaisseur initiale du jeu pastille/gaine (1.2 mm), la réserve d'expansion des pastilles est de l'ordre de 1 mm, pour un rayon de pastille de 8.7 mm, soit un taux d'expansion admissible de l'ordre de 11.5% avant atteint de l'IMPG. Ces caractéristiques permettent usuellement d'atteindre des taux de capture neutronique de l'ordre de 200*10²⁰ captures par cm³ d'absorbant.

Avec un joint solide poreux selon l'invention, en considérant la fin de vie atteinte pour une disparition complète de la porosité du joint (par écrasement sous expansion volumique des pastilles de B₄C), on peut évaluer le gain sur le taux d'absorption neutronique envisageable à partir de la porosité de fabrication prévue pour le joint selon l'invention. Pour le passage d'une chemise de 200 µm d'épaisseur à un joint de 1.2 mm d'épaisseur, il faut une porosité de joint typiquement d'une valeur égale à un rapport de 1/1.2, soit de l'ordre de 83% (joint à 17% de la densité théorique du matériau le constituant), pour retrouver le taux de capture obtenu avec une solution de type chemise et bénéficier par ailleurs de l'avantage d'un centrage pastilles/gaine. On précise ici qu'on néglige l'effet thermique induit par le joint (des calculs montrent qu'il est de second ordre en ce qui concerne le taux de gonflement de l'absorbant).

### Exemple 1 Tresse avec couches en SiC /couches de C

Une première série de trois couches de tresse superposées est réalisée avec des fibres de carbone. (dénomination commerciale Thornel® P-100 contenant chacune 2000 filaments et qui sont craquées afin de réduire le diamètre du fil), sur un mandrin avec les caractéristiques suivantes :
- diamètre intérieur : 17,5 mm
- diamètre extérieur : 19,0 mm
- type de tressage : 2D
- angle de tressage : 45°

Une deuxième série de trois couches de tresse est réalisée sur la série de couches de tresse précédente avec des fibres de carbure de silicium (dénomination commerciale HI- NICALON™ type S contenant chacune 500 filaments), avec les caractéristiques suivantes :
- diamètre intérieur : 19,0 mm,
- diamètre extérieur : 21,2 mm
- type de tressage : 2D
- angle de tressage 45°

La tresse multicouche 3 ainsi constituée est comprimée dans un moule cylindrique de diamètre intérieur de 19.7 mm. Un liant éliminable soluble, ici un alcool polyvinylique, est ensuite introduit dans la tresse puis le solvant est évaporé.

La tresse 3 est alors démoulée puis est introduite dans une gaine métallique 1 de diamètre intérieur de 19.8 mm. Le mandrin central est alors retiré, puis une colonne de pastilles 5 d'absorbant neutronique en carbure de bore B₄C de diamètre de 17,4 mm est introduite dans la tresse. Le liant est éliminé par traitement thermique de l'ensemble sous dépression. La tresse 3 se décomprime alors et entre en contact physique avec les pastilles 5 et la gaine 1.

La tresse 3 a donc une épaisseur de fabrication égale au jeu total de montage entre gaine 1 et pastilles 5, soit de 1.2 mm.

La gaine 1 peut alors être fermée à ses extrémités, par exemple par brasure. Même si non représenté, avant de réaliser l'étape définitive de fermeture un ressort hélicoïdal de compression est logé dans la chambre ou vase d'expansion 6 avec son extrémité inférieure en appui contre l'empilement des pastilles 5 et son autre extrémité en appui contre le bouchon supérieur. Les fonctions principales de ce ressort sont le maintien de l'empilement de pastilles 5 selon l'axe longitudinal XX' et l'absorption au cours du temps de l'allongement de la colonne combustible sous l'effet du gonflement longitudinal des pastilles 5.

La barre de commande nucléaire ainsi réalisée avec un joint solide poreux selon l'invention 3 peut alors être utilisé pour son application dans un réacteur nucléaire à neutrons rapides.

### Exemple 2 : Structure aiguilletée en carbone

Des nappes de fibres de carbone (dénomination commerciale Thornel® P-25) sont aiguilletées sous forme d'un tube de diamètre intérieur de 17,5 mm et de diamètre extérieur de 21.2 mm, sur un mandrin en graphite.

L'ensemble subit alors un traitement thermique, à 3200°C sous Argon. Le tube ainsi constitué est comprimé dans un moule cylindrique de diamètre intérieur de 19.7 mm. Un liant éliminable soluble, ici un alcool polyvinylique, est ensuite introduit dans la structure puis le solvant est évaporé.

Le joint solide poreux 3 ainsi obtenu est alors démoulé puis est introduite dans une gaine 1 de diamètre intérieur de 19.8 mm. Le mandrin central est alors retiré, puis une colonne de pastilles 5 d'absorbant neutronique en carbure de bore B₄C de diamètre de 17,4 mm est introduit dans la structure mixte joint 3/gaine 1.

Le liant est alors éliminé par traitement thermique de l'ensemble sous dépression. Le joint 3 se décomprime alors et entre en contact avec les pastilles 5 empilées et la gaine 1.

La gaine 1 peut alors être fermée à ses extrémités, par exemple par brasure. Même si non représenté, avant de réaliser l'étape définitive de fermeture, un ressort hélicoïdal de compression est logé dans la chambre ou vase d'expansion 6 avec son extrémité inférieure en appui contre l'empilement des pastilles 5 et son autre extrémité en appui contre le bouchon supérieur. Les fonctions principales de ce ressort sont le maintien de l'empilement de pastilles 5 selon l'axe longitudinal XX' et l'absorption au cours du temps de l'allongement de la colonne combustible sous l'effet du gonflement longitudinal des pastilles 5. La barre de commande nucléaire ainsi réalisée avec un joint solide poreux selon l'invention 3 peut alors être utilisée pour son application dans un réacteur nucléaire à neutrons rapides.

### Exemple 3 : mousse de carbone revêtue d'un alliage de W-Re 5%

Un tube, de diamètre intérieur de 17,4 mm et de diamètre extérieur 19.8 mm, en mousse de carbone composée d'alvéoles ouvertes de 40 µm de diamètre est placé dans un four de dépôt chimique en phase vapeur (en anglais Chemical Vapor Déposition, CVD).

Les ligaments constituant la mousse subissent un dépôt d'une épaisseur d'environ 7 µm d'un alliage W-Re à 5% à partir de la décomposition d'un mélange de composés halogénés du tungstène et du rhénium.

Ce tube de mousse est ensuite introduit dans la gaine 1 de diamètre intérieur de 19.8 mm, puis la colonne de pastilles d'absorbant neutronique en carbure de bore B₄C 5 de diamètre de 17.4 mm est, à son tour, introduite dans le tube de mousse.

La gaine 1 peut alors être fermée à ses extrémités, par exemple par brasure. Même si non représenté, avant de réaliser l'étape définitive de fermeture, un ressort hélicoïdal de compression est logé dans la chambre ou vase d'expansion 6 avec son extrémité inférieure en appui contre l'empilement des pastilles 5 et son autre extrémité en appui contre le bouchon supérieur. Les fonctions principales de ce ressort sont le maintien de l'empilement de pastilles 5 selon l'axe longitudinal XX' et l'absorption au cours du temps de l'allongement de la colonne combustible sous l'effet du gonflement longitudinal des pastilles 5. La barre de commande nucléaire ainsi réalisé avec un joint solide poreux selon l'invention 3 peut alors être utilisée pour son application dans un réacteur nucléaire à neutrons rapides.

D'autres améliorations peuvent être prévues sans pour autant sortir du cadre de l'invention. Ainsi, dans l'ensemble des exemples 1 à 3 ci-dessus, le joint solide poreux 3 a une épaisseur à la fabrication, c'est-à-dire une fois la gaine 1 fermée et la barre de commande prête pour son application, égal au jeu de montage total dimensionné entre la gaine 1 et la colonne de pastilles 5 en matériau absorbant B₄C.

On peut bien entendu prévoir des jeux (voir références 2, 4 en figure 1) qui subsistent une fois la barre de commande prête, à la condition que les procédés de fabrication et les propriétés, notamment de dilatation thermique différentielle, respectivement de la gaine 1 et du joint solide poreux 3 d'une part et du joint 3 et des pastilles 5 le permettent.

Ces jeux tels que montrés en référence 2, 4 de la figure 1 sont, à priori, remplis d'un gaz ou d'un métal liquide qui occupe alors naturellement les porosités ouvertes du joint 3 solide poreux selon l'invention et celles des pastilles 5 d'absorbant neutronique en B₄C.

Mais, selon l'invention, et contrairement aux solutions selon l'état de l'art, et plus particulièrement à la solution selon le brevet US 4235673, les jeux au montage ne sont pas impératifs et ne sont donc pas des jeux fonctionnels prévus pour accommoder le gonflement volumique des pastilles sous irradiation.

Par ailleurs, le mandrin utilisé pour former le joint solide poreux comme dans les exemples décrits peut être en différents matériaux compatibles avec ceux du joint, tels que le graphite, le quartz.

De même, pour l'étape finale du procédé, avant fermeture de la gaine, il a été décrit dans les exemples 1 à 3, la mise en place d'un ressort hélicoïdal de compression. De manière plus générale, on peut lors de cette étape finale avant l'étape de fermeture proprement dite de la gaine, utiliser ce qui est couramment désigné par un «système d'internes » dans le domaine nucléaire, c'est-à-dire un assemblage de composants tels que ressort, cale... dont la fonction est d' assurer le positionnement axial de la colonne de pastilles au sein de la gaine.

La figure 2 illustre le comportement en compression de joints d'interface selon l'invention à forte porosité ouverte et à base de tresses ou à base de feutres en matériau SiC.

Plus exactement, tel qu'illustré, il s'agit d'essais en compression cyclée, chaque cycle alternant une charge et une décharge, ce qui se traduit sur la figure 2 par des boucles de chargement dans le plan déformation-contrainte.

En abscisses, on a indiqué les valeurs du taux de compression (déformation en %) du joint selon son épaisseur.

En ordonnées, on a indiqué les valeurs de chargement mécanique (contrainte en MPa) transféré par le joint sous l'effet de son écrasement.

Ainsi, de fait, les contraintes indiquées correspondent au chargement mécanique radial σᵣ que subirait la gaine d'une barre de commande nucléaire sous l'effet du gonflement volumique des pastilles d'absorbant neutronique en B₄C empilées les unes sur les autres, les contraintes étant directement transmises à la gaine par la compression du joint entre les pastilles et la gaine. Ce chargement radial donne lieu à un chargement circonférentiel σ_{θ} dimensionnant dont l'intensité correspond à celle du chargement radial majoré d'un facteur multiplicatif dont un bon ordre de grandeur est donné par le rapport du rayon moyen de la gaine r_{G} à son épaisseur eG, qui vaut typiquement 5 à 10 : σ_{θ} ≈ (r_{G}/e_{G}) σᵣ.

La figure 2 illustre ainsi le fait qu'un joint d'interface selon l'invention est adapté pour fonctionner comme un amortisseur de contraintes : le chargement transmis ne devient significatif que pour un taux de compression suffisant au-delà duquel le chargement transmis croit de manière progressive avec le taux de compression, jusqu'à atteindre (sans cinétique brutale), la valeur seuil du chargement limite admissible. Ainsi, pour un chargement σᵣ considéré significatif à partir de 1 MPa, le taux de compression est de respectivement de l'ordre de 40% et 70% pour les joints de type tresse et feutre considérés en figure 2.

Dans une situation de fonctionnement sous irradiation en réacteur, la gaine d'une barre de commande nucléaire ne peut admettre un chargement mécanique par des absorbants neutronique en B₄C que dans la mesure où celui-ci reste en-deçà d'une limite garantissant l'absence de rupture de gaine. Ainsi, si l'on fixe, par exemple, la valeur seuil de chargement circonférentiel σ_{θ} admissible à 100 MPa (ce qui constitue une valeur raisonnable vis-à-vis des chargements usuellement admis), soit un chargement radial σᵣ de l'ordre de 10 MPa (pour un rapport r_{G}/e_{G} de l'ordre de 10), on constate sur la figure 2, que les joints de type tresse et feutre considérés admettent respectivement un taux de compression de l'ordre de 60% et 95%, en-deçà duquel le chargement mécanique transmis à la gaine reste admissible.

Il est à noter qu'après les essais réalisés selon la figure 2, on a pu constater que le joint d'interface selon l'invention à base de tresse et celui à base de feutre conservait son intégrité: il y ainsi préservation de la structure de tresse/feutre, sans formation de fragments qui seraient susceptibles de se relocaliser dans un jeu entre pastilles et gaine réouvert dans une barre de commande dans un réacteur à neutrons rapides RNR.

Afin d'assurer les meilleures performances économiques, une barre de commande doit être maintenue en réacteur à neutrons rapides le plus longtemps possible. Afin de satisfaire les objectifs de sûreté, ces performances sont généralement limitées par diverses contraintes d'exploitation. L'une des limitations les plus sévères est imposée par la nécessité de garantir, en toutes circonstances, l'intégrité mécanique de la gaine de la barre de commande. Ceci se traduit ainsi par la définition d'un chargement limite admissible de la gaine (contrainte et/ou déformation au-delà de laquelle l'intégrité de la gaine ne peut plus être garantie). Or, sous irradiation, les pastilles d'absorbant neutronique en B₄C subissent un gonflement volumique continu qui conduit à une interaction mécanique pastilles/gaine (IMPG) susceptible finalement de conduire à un chargement rédhibitoire de la gaine. La durée d'exploitation d'une barre de commande nucléaire avec absorbants nucléaires en B₄C est donc fortement liée au délai de l'occurrence d'une interaction excessive. Le joint d'interface selon l'invention tel que défini ci-dessus apporte une réponse satisfaisante car il permet une expansion ou gonflement volumique des pastilles durable. A taux de gonflement volumique des pastilles fixé, la durabilité dépend de l'épaisseur initiale du joint et du taux de compression qu'il admet avant que son état de compression ne conduise à transmettre un chargement mécanique rédhibitoire à la gaine : l'épaisseur initiale de joint à mettre en oeuvre est d'autant plus faible que le taux de compression admissible est élevé.

La figure 2 illustre le fait que des taux de compression très élevés sont nécessaires pour atteindre la limite de compression des joints de type tresse ou feutre proposés, ce qui signifie qu'on peut atteindre des durées d'irradiation accrues moyennant la mise en oeuvre d'un joint d'épaisseur raisonnable. Les fortes épaisseurs de joint, caractéristiques des barres de commande de réacteur à spectre rapide, favorisent la mise en oeuvre de joints de forte porosité, qui permettent aisément d'atteindre, et probablement de dépasser, les performances de la solution de chemisage mise en oeuvre dans SUPERPHENIX.

Par ailleurs, des essais de cisaillement sur une structure fibreuse selon l'invention, de hauteur de l'ordre de 1 cm, ont été réalisés en lui imposant des efforts correspondant à des déplacements cycliques de l'ordre de 100µm à des températures de l'ordre de 400°C. Pour ces allongements de 1 %, la structure fibreuse est restée parfaitement intègre. Dans le cas des barres de commande de réacteur à spectre rapide, les fortes épaisseurs de joint permettent, par ailleurs, la mise en oeuvre de joints selon l'invention comprenant plusieurs couches de tresse et/ou feutre superposées. Vis-à-vis du cisaillement axial auquel est soumis le joint sous irradiation, du fait de l'allongement de la colonne de pastille (effet du gonflement) plus prononcé que celui de la gaine, cette structure multicouche réduit le chargement mécanique du joint en permettant le glissement relatif des couches les unes sur les autres, et limitant, de fait, le risque que le joint soit endommagé par cisaillement.

### REFERENCES CITEES :

[1] S. Audisio, Dépôts chimiques à partir d'une phase gazeuse, Techniques de l'ingénieur, M1660, 1985.
[2] J. Banhart, Manufacture, characterisation and application of cellular metals and metal foams, Progress in Materials Science, Vol. 46, pp. 559-632, 2001.
[3] A. Berthet, B. Kaputsa, R. Traccucci, P. Combette, F. couvreur, D. Gouaillardou, J.C. Leroux, J. Royer & M. Trotabas, Pressurized Water Reactor Fuel Assembly, in The nuclear fuel of pressurized water reactors and fast reactors - Design and behaviour, (H. Bailly, D. Ménessier and C. Prunier, Editors), Lavoisier Publishing, Paris, pp. 271-436, 1999.
[4] L. Caramaro, Textiles à usages techniques, Techniques de l'ingénieur N2511, 2006.
[5] D. Gosset et P. Herter, Matériaux absorbants neutroniques pour le pilotage des réacteurs, Techniques de l'ingénieur B3720, 2007.
[6] Y. Guérin, In-reactor behaviour of fuel materials, in The nuclear fuel of pressurized water reactors and fast reactors - Design and behaviour, (H. Bailly, D. Ménessier and C. Prunier, Editors), Lavoisier Publishing, Paris, pp. 77-158, 1999.
[7] L. Kocon et T. Piquero, Les aérogels et les structures alvéolaires : deux exemples de mousses de carbone, L'Actualité Chimique, n° 295-296, pp. 119-123, 2006.
[8] B. Kryger & J.M. Escleine, Absorber elements, in The nuclear fuel of pressurized water reactors and fast reactors - Design and behaviour, (H. Bailly, D. Ménessier and C. Prunier, Editors), Lavoisier Publishing, Paris, pp. 531-565, 1999.
[9] J.Y. Malo, N. Alpy, F. Bentivoglio, F. Bertrand, L. Cachon, G. Geffraye, D. Haubensack, A. Messié, F. Morin, Y. Péneliau, F. Pra, D. Plancq & P. Richard, Gas Cooled Fast Reactor 2400 MWTh, status on the conceptual design studies and preliminary safety analysis, Proceedings of the ICAPP'09 conference, (Tokyo, Japan, May 10-14, 2009).
[10] R.B. Matthews and R.J. Herbst, Nuclear Technology, Vol. 63, pp. 9-22, 1983.
[11] Hj. Matzke, Science of advanced LMFBR fuels, North Holland, Amsterdam, 1986.
[12] P. Millet, J.L. Ratier, A. Ravenet et J. Truffert, Fast Reactor Fuel Subassembly, in The nuclear fuel of pressurized water reactors and fast reactors - Design and behaviour, (H. Bailly, D. Ménessier and C. Prunier, Editors), Lavoisier Publishing, Paris, pp. 437-529, 1999.
[13] K. Tanaka, K. Maeda, K. Katsuyama, M. Inoue, T. Iwai and Y. Arai, Journal of Nuclear Materials, Vol. 327, pp. 77-87, 2004.
[14] Design and construction rules for fuel assemblies of PWR nuclear power plants, AFCEN, 2005.

## Revendications

1. Barre de commande nucléaire s'étendant selon une direction longitudinale (XX') comprenant une pluralité de pastilles (5), en matériau carbure de bore B₄C absorbant les neutrons, empilées les unes sur les autres sous la forme d'une colonne et une gaine (1) entourant la colonne de pastilles, dans laquelle, en section transversale à la direction longitudinale (XX'), la gaine et les pastilles ont une section circulaire et dans laquelle un joint d'interface (3), également de section circulaire en section transversale à la direction longitudinale (XX'), en matériau transparent aux neutrons, est inséré entre la gaine et la colonne de pastilles empilées sur au moins la hauteur de cette dernière, dans laquelle le joint d'interface est une structure (3), découplée mécaniquement à la fois de la gaine (1) et de la colonne de pastilles (5), de conductivité thermique élevée et à porosité ouverte, adapté pour se déformer par compression selon son épaisseur de sorte à subir un écrasement sous l'effet du gonflement volumique des pastilles sous irradiation, l'épaisseur initiale du joint et son taux de compression étant tels que le chargement mécanique transmis à la gaine par les pastilles sous irradiation reste inférieur à une valeur seuil prédéterminée, **caractérisée en ce que** le joint d'interface est constitué à partir d'une tresse comprenant une pluralité de couches de fibres de carbone et d'une pluralité de couches comprenant des fibres de carbure de silicium superposée sur les couches de fibres de carbone.

2. Barre de commande nucléaire s'étendant selon une direction longitudinale (XX') comprenant une pluralité de pastilles (5), en matériau carbure de bore B₄C absorbant les neutrons, empilées les unes sur les autres sous la forme d'une colonne et une gaine (1) entourant la colonne de pastilles, dans laquelle, en section transversale à la direction longitudinale (XX'), la gaine et les pastilles ont une section circulaire et dans laquelle un joint d'interface (3), également de section circulaire en section transversale à la direction longitudinale (XX'), en matériau transparent aux neutrons, est inséré entre la gaine et la colonne de pastilles empilées sur au moins la hauteur de cette dernière, dans laquelle le joint d'interface est une structure (3), découplée mécaniquement à la fois de la gaine (1) et de la colonne de pastilles (5), de conductivité thermique élevée et à porosité ouverte, adapté pour se déformer par compression selon son épaisseur de sorte à subir un écrasement sous l'effet du gonflement volumique des pastilles sous irradiation, l'épaisseur initiale du joint et son taux de compression étant tels que le chargement mécanique transmis à la gaine par les pastilles sous irradiation reste inférieur à une valeur seuil prédéterminée, **caractérisée en ce que** le joint d'interface est constitué d'une ou plusieurs nappe(s) de fibres de carbone.

3. Barre de commande nucléaire s'étendant selon une direction longitudinale (XX') comprenant une pluralité de pastilles (5), en matériau carbure de bore B₄C absorbant les neutrons, empilées les unes sur les autres sous la forme d'une colonne et une gaine (1) entourant la colonne de pastilles, dans laquelle, en section transversale à la direction longitudinale (XX'), la gaine et les pastilles ont une section circulaire et dans laquelle un joint d'interface (3), également de section circulaire en section transversale à la direction longitudinale (XX'), en matériau transparent aux neutrons, est inséré entre la gaine et la colonne de pastilles empilées sur au moins la hauteur de cette dernière, dans laquelle le joint d'interface est une structure (3), découplée mécaniquement à la fois de la gaine (1) et de la colonne de pastilles (5), de conductivité thermique élevée et à porosité ouverte, adapté pour se déformer par compression selon son épaisseur de sorte à subir un écrasement sous l'effet du gonflement volumique des pastilles sous irradiation, l'épaisseur initiale du joint et son taux de compression étant tels que le chargement mécanique transmis à la gaine par les pastilles sous irradiation reste inférieur à une valeur seuil prédéterminée, **caractérisée en ce que** le joint d'interface est réalisé à partir d'un ou plusieurs matériaux alvéolaires à base de carbone, tel(s) qu'une mousse.

4. Barre de commande nucléaire selon la revendication 1, 2 ou 3, dans laquelle la porosité ouverte du joint d'interface a un volume au moins égal à 30 % du volume total du joint d'interface issu de la fabrication.

5. Barre de commande nucléaire selon la revendication 4, dans laquelle la porosité ouverte du joint d'interface a un volume compris entre 30 % et 95 % du volume total du joint d'interface issu de la fabrication.

6. Barre de commande nucléaire selon la revendication 5, dans laquelle la porosité ouverte du joint d'interface a un volume compris entre 50 % et 85 % du volume total du joint d'interface issu de la fabrication.

7. Barre de commande nucléaire selon l'une des revendications précédentes, dans laquelle le joint d'interface présente en section transversale à la direction (XX'), une épaisseur supérieure à au moins 10 % du rayon des pastilles.

8. Barre de commande nucléaire selon la revendication 1, dans laquelle le joint d'interface a un pourcentage volumique de fibres compris entre 15 et 50 %.

9. Barre de commande nucléaire selon l'une des revendications précédentes, pour un réacteur à neutrons rapides refroidi au gaz (RNR-gaz), dans lequel le matériau de base de la gaine est un composite à matrice céramique (CMC) réfractaire, tel qu'en SiC-SiC_{f}, et les pastilles d'absorbant sont en B₄C.

10. Barre de commande selon l'une des revendications précédentes 1 à 8, pour un réacteur à neutrons rapides refroidi au sodium (RNR-Na), dans lequel la gaine est en matériau métallique, et les pastilles d'absorbant sont en B₄C.

11. Barre de commande selon l'une des revendications 1 à 8, pour réacteur à eau pressurisée (REP) ou bouillante (REB), dans lequel la gaine comprend un matériau composite à matrice céramique (CMC) réfractaire et les pastilles d'absorbant sont en B₄C.

12. Assemblage absorbant nucléaire comprenant une pluralité de barres de commande nucléaire selon l'une quelconque des revendications 1 à 11 et agencés entre elles selon un réseau.

13. Procédé de réalisation d'une barre de commande nucléaire comprenant les étapes suivantes :
a/ réalisation au moins partielle d'un joint de section transversale circulaire, en matériau transparent aux neutrons, sous la forme d'une structure (3) de conductivité thermique élevée et à porosité ouverte, adapté pour se déformer par compression selon son épaisseur;
b/ insertion du joint au moins réalisé partiellement dans une gaine cylindrique à section transversale circulaire et ouverte à au moins une de ses extrémités, en matériau transparent aux neutrons ou non,
c/ introduction d'une pluralité de pastilles en matériau carbure de bore B₄C absorbant neutronique sur au plus la hauteur du joint dans ce dernier inséré dans la gaine cylindrique à section transversale circulaire,
d/ fermeture complète de la gaine une fois le joint réalisé totalement,
**caractérisé en ce que** l'étape a/ est réalisée selon les sous-étapes suivantes :
- superposition d'une pluralité de couches de tresse comprenant des fibres de carbure de silicium sur une pluralité de couches de tresse de fibres de carbone elle-même sur un mandrin,
- compression de la tresse multicouche dans un moule cylindrique,
- introduction d'un liant soluble dans la tresse comprimée,
- évaporation du solvant,
selon lequel l'étape b/ est réalisée à l'aide du mandrin autour duquel la tresse est en contact, le mandrin étant ensuite retiré,
et selon lequel on réalise ultérieurement à l'étape c/ un traitement thermique sous dépression afin d'éliminer le liant et ainsi mettre en contact le joint avec la pluralité de pastilles empilées et avec la gaine.

14. Procédé de réalisation selon la revendication 13, selon lequel les couches de tresse sont de type bidimensionnelle avec un angle de tressage de 45° par rapport à l'axe du mandrin.

15. Procédé de réalisation selon la revendication 13 ou 14, selon lequel les fibres de carbone sont de type Thornel® P-100, contenant chacune 2000 filaments et craquées.

16. Procédé de réalisation selon la revendication 13 à 15, selon lequel les fibres de carbure de silicium sont de type HI- NICALON™ type S contenant chacune 500 filaments.

17. Procédé de réalisation selon l'une des revendications 13 à 16, selon lequel le liant soluble est un alcool polyvinylique.

18. Procédé de réalisation d'une barre de commande nucléaire comprenant les étapes suivantes :
a/ réalisation au moins partielle d'un joint de section transversale circulaire, en matériau transparent aux neutrons, sous la forme d'une structure (3) de conductivité thermique élevée et à porosité ouverte, adapté pour se déformer par compression selon son épaisseur,
b/ insertion du joint au moins réalisé partiellement dans une gaine cylindrique à section transversale circulaire et ouverte à au moins une de ses extrémités, en matériau transparent aux neutrons ou non,
c/ introduction d'une pluralité de pastilles en matériau carbure de bore B₄C absorbant neutronique sur au plus la hauteur du joint dans ce dernier inséré dans la gaine cylindrique à section transversale circulaire,
d/ fermeture complète de la gaine une fois le joint réalisé totalement,
**caractérisé en ce que** l'étape a/ est réalisée selon les sous-étapes suivantes :
- aiguilletage de nappes de fibres de carbone sous la forme d'un tube sur un mandrin ;
- réalisation d'un traitement thermique ;
- compression du tube traité thermiquement dans un moule cylindrique ;
- introduction d'un liant soluble dans le tube comprimé ;
- évaporation du solvant ;
selon lequel l'étape b/ est réalisée à l'aide du mandrin autour duquel le tube est en contact, le mandrin étant ensuite retiré,
et selon lequel on réalise ultérieurement à l'étape c/ un traitement thermique sous dépression afin d'éliminer le liant et ainsi mettre en contact le joint avec la pluralité de pastilles empilées et avec la gaine.

19. Procédé de réalisation selon la revendication 18, selon lequel les fibres de carbone sont de type Thornel® P-25.

20. Procédé de réalisation selon la revendication 18 ou 19, selon lequel le liant soluble est un alcool polyvinylique.

21. Procédé de réalisation d'une barre de commande nucléaire comprenant les étapes suivantes :
a/ réalisation au moins partielle d'un joint de section transversale circulaire, en matériau transparent aux neutrons, sous la forme d'une structure (3) de conductivité thermique élevée et à porosité ouverte, adapté pour se déformer par compression selon son épaisseur ;
b/ insertion du joint au moins réalisé partiellement dans une gaine cylindrique à section transversale circulaire et ouverte à au moins une de ses extrémités, en matériau transparent aux neutrons ou non ;
c/ introduction d'une pluralité de pastilles en matériau carbure de bore B₄C absorbant neutronique sur au plus la hauteur du joint dans ce dernier inséré dans la gaine cylindrique à section transversale circulaire;
d/ fermeture complète de la gaine une fois le joint réalisé totalement;
**caractérisé en ce que** l'étape a/ est réalisée selon les sous-étapes suivantes :
- réalisation d'un tube en mousse de carbone composée d'alvéoles ouvertes,
- dépôt chimique en phase vapeur (CVD) d'un alliage en W-Re sur le tube en mousse de carbone.

## Patentansprüche

1. Kernsteuerstab, der sich entlang einer Längsrichtung (XX') erstreckt, umfassend eine Mehrzahl von in der Form einer Säule aufeinander gestapelten Tabletten (5) aus einem die Neutronen absorbierenden Borkarbid-Material B₄C und eine Hülle (1), welche die Säule aus Tabletten umgibt, wobei in einem Schnitt transversal zu der Längsrichtung (XX') die Hülle und die Tabletten einen kreisförmigen Querschnitt aufweisen, und wobei ein Grenzflächen-Verbindungsstück (3), ebenfalls mit kreisförmigem Querschnitt in einem Schnitt transversal zu der Längsrichtung (XX'), aus einem für die Neutronen transparenten Material zwischen die Hülle und die Säule aus gestapelten Tabletten eingesetzt ist, bis wenigstens auf die Höhe von dieser Letzteren, wobei das Grenzflächen-Verbindungsstück eine sowohl von der Hülle (1) als auch von der Säule aus Tabletten (5) mechanisch entkoppelte Struktur (3) mit einer erhöhten thermischen Leitfähigkeit und offener Porosität ist, welches dazu angepasst ist, sich durch Kompression entlang seiner Dicke zu verformen, um unter der Einwirkung des Anschwellens der Tabletten im Volumen unter Bestrahlung zerdrückt zu werden, wobei die anfängliche Dicke des Verbindungsstücks und dessen Kompressionsrate derart sind, dass die durch die Tabletten unter Bestrahlung auf die Hülle übertragene mechanische Belastung kleiner bleibt als ein vorbestimmter Schwellenwert, **dadurch gekennzeichnet, dass** das Grenzflächen-Verbindungsstück ausgehend von einem Geflecht gebildet ist, welches eine Mehrzahl von Lagen von Karbon-Fasern umfasst, und von einer Mehrzahl von Siliziumkarbid-Fasern umfassenden Lagen, die den Lagen aus Karbonfasern überlagert ist.

2. Kernsteuerstab, der sich entlang einer Längsrichtung (XX') erstreckt, umfassend eine Mehrzahl von in der Form einer Säule aufeinander gestapelten Tabletten (5) aus einem die Neutronen absorbierenden Borkarbid-Material B₄C und eine Hülle (1), welche die Säule aus Tabletten umgibt, wobei in einem Schnitt transversal zu der Längsrichtung (XX') die Hülle und die Tabletten einen kreisförmigen Querschnitt aufweisen, und wobei ein Grenzflächen-Verbindungsstück (3), ebenfalls mit kreisförmigem Querschnitt in einem Schnitt transversal zu der Längsrichtung (XX'), aus einem für die Neutronen transparenten Material zwischen die Hülle und die Säule aus gestapelten Tabletten eingesetzt ist, bis wenigstens auf die Höhe von dieser Letzteren, wobei das Grenzflächen-Verbindungsstück eine sowohl von der Hülle (1) als auch von der Säule aus Tabletten (5) mechanisch entkoppelte Struktur (3) mit einer erhöhten thermischen Leitfähigkeit und offener Porosität ist, welches dazu angepasst ist, sich durch Kompression entlang seiner Dicke zu verformen, um unter der Einwirkung des Anschwellens der Tabletten im Volumen unter Bestrahlung zerdrückt zu werden, wobei die anfängliche Dicke des Verbindungsstücks und dessen Kompressionsrate derart sind, dass die durch die Tabletten unter Bestrahlung auf die Hülle übertragene mechanische Belastung kleiner bleibt als ein vorbestimmter Schwellenwert, **dadurch gekennzeichnet, dass** das Grenzflächen-Verbindungsstück aus einem oder mehreren Tüchern aus Karbon-Fasern gebildet ist.

3. Kernsteuerstab, der sich entlang einer Längsrichtung (XX') erstreckt, umfassend eine Mehrzahl von in der Form einer Säule aufeinander gestapelten Tabletten (5) aus einem die Neutronen absorbierenden Borkarbid-Material B₄C und eine Hülle (1), welche die Säule aus Tabletten umgibt, wobei in einem Schnitt transversal zu der Längsrichtung (XX') die Hülle und die Tabletten einen kreisförmigen Querschnitt aufweisen, und wobei ein Grenzflächen-Verbindungsstück (3), ebenfalls mit kreisförmigem Querschnitt in einem Schnitt transversal zu der Längsrichtung (XX'), aus einem für die Neutronen transparenten Material zwischen die Hülle und die Säule aus gestapelten Tabletten eingesetzt ist, bis wenigstens auf die Höhe von dieser Letzteren, wobei das Grenzflächen-Verbindungsstück eine sowohl von der Hülle (1) als auch von der Säule aus Tabletten (5) mechanisch entkoppelte Struktur (3) mit einer erhöhten thermischen Leitfähigkeit und offener Porosität ist, welches dazu angepasst ist, sich durch Kompression entlang seiner Dicke zu verformen, um unter der Einwirkung des Anschwellens der Tabletten im Volumen unter Bestrahlung zerdrückt zu werden, wobei die anfängliche Dicke des Verbindungsstücks und dessen Kompressionsrate derart sind, dass die durch die Tabletten unter Bestrahlung auf die Hülle übertragene mechanische Belastung kleiner bleibt als ein vorbestimmter Schwellenwert, **dadurch gekennzeichnet, dass** das Grenzflächen-Verbindungsstück auf Grundlage von einem oder mehreren zellenartigen Materialien auf Karbon-Basis gebildet ist, beispielsweise einem Schaum.

4. Kernsteuerstab nach Anspruch 1, 2 oder 3, wobei die offene Porosität des Grenzflächen-Verbindungsstücks ein Volumen von wenigstens 30 % des Gesamtvolumens von dem Grenzflächen-Verbindungsstück nach der Herstellung einnimmt.

5. Kernsteuerstab nach Anspruch 4, wobei die offene Porosität des Grenzflächen-Verbindungsstücks ein Volumen zwischen 30 % und 95 % des Gesamtvolumens von dem Grenzflächen-Verbindungsstück nach der Herstellung einnimmt.

6. Kernsteuerstab nach Anspruch 5, wobei die offene Porosität des Grenzflächen-Verbindungsstücks ein Volumen zwischen 50 % und 85 % des Gesamtvolumens von dem Grenzflächen-Verbindungsstück nach der Herstellung einnimmt.

7. Kernsteuerstab nach einem der vorhergehenden Ansprüche, wobei das Grenzflächen-Verbindungsstück in einem Schnitt transversal zu der Richtung (XX') eine Dicke aufweist, die größer als wenigstens 10 % des Radius der Tabletten ist.

8. Kernsteuerstab nach Anspruch 1, wobei das Grenzflächen-Verbindungsstück einen Volumen-Anteil von Fasern zwischen 15 und 50 % aufweist.

9. Kernsteuerstab nach einem der vorhergehenden Ansprüche für einen gasgekühlten Reaktor mit schnellen Neutronen (Gas-RNR), wobei das Basis-Material der Hülle ein Verbundwerkstoff mit einer hitzebeständigen Keramik-Matrix (CMC) ist, beispielsweise SiC-SiC_{f}, und die absorbierenden Tabletten aus B₄C bestehen.

10. Kernsteuerstab nach einem der vorhergehenden Ansprüche 1 bis 8 für einen Natrium-gekühlten Reaktor für schnelle Neutronen (Natrium-RNR), wobei die Hülle aus einem metallischen Material besteht und die absorbierenden Tabletten aus B₄C bestehen.

11. Kernsteuerstab nach einem der Ansprüche 1 bis 8, für einen Druckwasserreaktor (DWR) oder einen Siedewasserreaktor (SWR), wobei die Hülle einen Verbundwerkstoff mit einer hitzebeständigen Keramik-Matrix (CMC) umfasst und die absorbierenden Tabletten aus B₄C bestehen.

12. Nukleare Absorber-Anordnung, umfassend eine Mehrzahl von Kernsteuerstäben nach einem der Ansprüche 1 bis 11, die untereinander in einem Gitter angeordnet sind.

13. Herstellungsverfahren für einen Kernsteuerstab, umfassend die folgenden Schritte:
a) wenigstens teilweise Herstellung eines Verbindungsstücks mit kreisförmigem Querschnitt aus einem für die Neutronen transparenten Material in Form einer Struktur (3) mit erhöhter thermischer Leitfähigkeit und offener Porosität, dazu angepasst, sich durch Kompression entlang seiner Dicke zu verformen,
b) Einsetzen des wenigstens teilweise hergestellten Verbindungsstücks in eine zylindrische Umhüllung, die einen kreisförmigen Querschnitt aufweist und an wenigstens einem ihrer Enden offen ist, aus einem Material, das für die Neutronen transparent ist, oder nicht,
c) Einsetzen einer Mehrzahl von Tabletten aus einem Neutronen absorbierenden Borkarbid-Material B₄C höchstens bis auf Höhe des Verbindungsstücks in dieses letztere, welches in die zylindrische Hülle mit kreisförmigem Querschnitt eingesetzt ist,
d) vollständiges Schließen der Hülle, wenn das Verbindungsstück vollständig hergestellt ist,
**dadurch gekennzeichnet, dass** der Schritt a) gemäß der folgenden Unterschritte ausgeführt wird:
- Überlagern einer Mehrzahl von Geflecht-Lagen, umfassend Siliziumkarbid-Fasern und einer Mehrzahl von Geflecht-Lagen aus Karbon-Fasern, diese auf einem Dorn,
- Komprimieren des mehrlagigen Geflechts in einer zylindrischen Form,
- Einleiten eines löslichen Bindemittels in das komprimierte Geflecht,
- Verdampfen des Lösungsmittels,
wobei der Schritt b) mit Hilfe des Doms ausgeführt wird, um welchen herum das Geflecht in Kontakt steht, wobei der Dorn anschließend herausgezogen wird,
und wobei nach dem Schritt c) eine thermische Behandlung unter Unterdruck durchgeführt wird, um das Bindemittel zu eliminieren und auf diese Weise das Verbindungsstück in Kontakt mit der Mehrzahl aufeinander gestapelter Tabletten und mit der Hülle zu bringen.

14. Herstellungsverfahren nach Anspruch 13, wobei die Geflecht-Lagen vom zweidimensionalen Typ sind, mit einem Geflecht-Winkel von 45° in Bezug auf die Achse des Dorns.

15. Herstellungsverfahren nach Anspruch 13 oder 14, wobei die Karbon-Fasern vom Typ Thornel® P-100 sind, welche jeweils 2000 Filamente enthalten und gebrochen/gerissen sind.

16. Herstellungsverfahren nach Anspruch 13 bis 15, wobei die Siliziumkarbid-Fasern vom Typ HI-NICALON™ Typ S sind, welche jeweils 500 Filamente enthalten.

17. Herstellungsverfahren nach einem der Ansprüche 13 bis 16, wobei das lösliche Bindemittel ein Polyvinyl-Alkohol ist.

18. Herstellungsverfahren für einen Kernsteuerstab, umfassend die folgenden Schritte:
a) wenigstens teilweise Herstellung eines Verbindungsstücks mit kreisförmigem Querschnitt aus einem für die Neutronen transparenten Material in Form einer Struktur (3) mit erhöhter thermischer Leitfähigkeit und offener Porosität, dazu angepasst, sich durch Kompression entlang seiner Dicke zu verformen,
b) Einsetzen des wenigstens teilweise hergestellten Verbindungsstücks in eine zylindrische Umhüllung, die einen kreisförmigen Querschnitt aufweist und an wenigstens einem ihrer Enden offen ist, aus einem Material, das für die Neutronen transparent ist, oder nicht,
c) Einsetzen einer Mehrzahl von Tabletten aus einem Neutronen absorbierenden Borkarbid-Material B₄C höchstens bis auf Höhe des Verbindungsstücks in dieses Letztere, welches in die zylindrische Hülle mit kreisförmigem Querschnitt eingesetzt ist,
d) vollständiges Schließen der Hülle, wenn das Verbindungsstück vollständig hergestellt ist,
**dadurch gekennzeichnet, dass** der Schritt a) gemäß der folgenden Unterschritte ausgeführt wird:
- Nadeln von Tüchern aus Karbon-Fasern in Form eines Rohrs auf einem Dorn,
- Durchführen einer thermischen Behandlung,
- Kompression des thermisch behandelten Rohrs in einer zylindrischen Form,
- Einleiten eines löslichen Bindemittels in das komprimierte Rohr,
- Verdampfen des Lösungsmittels.
wobei der Schritt b) mit Hilfe des Dorns ausgeführt wird, um welchen herum das Geflecht in Kontakt steht, wobei der Dorn anschließend herausgezogen wird,
und wobei nach dem Schritt c) eine thermische Behandlung unter Unterdruck durchgeführt wird, um das Bindemittel zu eliminieren und auf diese Weise das Verbindungsstück in Kontakt mit der Mehrzahl gestapelter Tabletten und mit der Hülle zu bringen.

19. Herstellungsverfahren nach Anspruch 18, wobei die Karbon-Fasern vom Typ Thornel® P-25 sind.

20. Herstellungsverfahren nach Anspruch 18 oder 19, wobei das lösliche Bindemittel ein Polyvinyl-Alkohol ist.

21. Herstellungsverfahren für einen Kernsteuerstab, umfassend die folgenden Schritte:
a) wenigstens teilweise Herstellung eines Verbindungsstücks mit kreisförmigem Querschnitt aus einem für die Neutronen transparenten Material in Form einer Struktur (3) mit erhöhter thermischer Leitfähigkeit und offener Porosität, dazu angepasst, sich durch Kompression entlang seiner Dicke zu verformen,
b) Einsetzen des wenigstens teilweise hergestellten Verbindungsstücks in eine zylindrische Umhüllung, die einen kreisförmigen Querschnitt aufweist und an wenigstens einem ihrer Enden offen ist, aus einem Material, das für die Neutronen transparent ist, oder nicht,
c) Einsetzen einer Mehrzahl von Tabletten aus einem Neutronen absorbierenden Borkarbid-Material B₄C höchstens bis auf Höhe des Verbindungsstücks in dieses Letztere, welches in die zylindrische Hülle mit kreisförmigem Querschnitt eingesetzt ist,
d) vollständiges Schließen der Hülle, wenn das Verbindungsstück vollständig hergestellt ist,
**dadurch gekennzeichnet, dass** der Schritt a) gemäß der folgenden Unterschritte ausgeführt wird:
- Herstellen eines Rohrs aus einem Karbon-Schaum, der aus offenen Zellen zusammengesetzt ist,
- Chemische Gasphasenabscheidung (CVD) einer W-Re Legierung auf das Rohr aus Karbon-Schaum.

## Claims

1. Nuclear control rod extending along a longitudinal direction (XX'), comprising a plurality of pellets (5), made of boron carbide B₄C neutron absorber material, stacked on each other in the form of a column and a cladding (1) surrounding the column of pellets, in which, the cladding and the pellets have a circular cross-section transverse to the longitudinal direction (XX'), and in which an interface joint (3), also with a circular cross-section transverse to the longitudinal direction (XX'), made of a material transparent to neutrons is inserted between the cladding and the column of stacked pellets, at least over the height of the column, in which the interface joint is a structure (3), mechanically decoupled from the cladding (1) and from the column of pellets (5), with a high thermal conductivity and open pores, adapted to deform by compression across its thickness so as to be compressed under the effect of the three-dimensional swelling of the pellets under irradiation, the initial thickness of the joint and its compression ratio being such that the mechanical load transmitted to the cladding by the pellets under irradiation remains less than a predetermined threshold value, **characterised in that** the interface joint is made from a braid comprising a plurality of carbon fibre layers and a plurality of layers comprising silicon carbide fibres superposed on the carbon fibre layers.

2. Nuclear control rod extending along a longitudinal direction (XX'), comprising a plurality of pellets (5), made of boron carbide B₄C neutron absorber material, stacked on each other in the form of a column and a cladding (1) surrounding the column of pellets, in which the cladding and the pellets have a circular cross-section transverse to the longitudinal direction (XX'), and in which an interface joint (3), also with a circular cross-section transverse to the longitudinal direction (XX'), made of a material transparent to neutrons is inserted between the cladding and the column of stacked pellets at least over the height of the column, in which the interface joint is a structure (3), mechanically decoupled from the cladding (1) and from the column of pellets (5), with a high thermal conductivity and open pores, adapted to deform by compression across its thickness so as to be compressed under the effect of the three-dimensional swelling of the pellets under irradiation, the initial thickness of the joint and its compression ratio being such that the mechanical load transmitted to the cladding by the pellets under irradiation is still less than a predetermined threshold value, **characterised in that** the interface joint is made from one or several layers of carbon fibres.

3. Nuclear control rod extending along a longitudinal direction (XX'), comprising a plurality of pellets (5), made of boron carbide B₄C neutron absorber material, stacked on each other in the form of a column and a cladding (1) surrounding the column of pellets, in which the cladding and the pellets have a circular cross-section transverse to the longitudinal direction (XX'), and in which an interface joint (3), also with a circular cross-section transverse to the longitudinal direction (XX'), made of a material transparent to neutrons is inserted between the cladding and the column of stacked pellets, at least over the height of the column, in which the interface joint is a structure (3), mechanically decoupled from the cladding (1) and from the column of pellets (5), with a high thermal conductivity and open pores, adapted to deform by compression across its thickness so as to be compressed under the effect of the three-dimensional swelling of the pellets under irradiation, the initial thickness of the joint and its compression ratio being such that the mechanical load transmitted to the cladding by the pellets under irradiation is still less than a predetermined threshold value, **characterised in that** the interface joint is made from one or several carbon-based honeycomb materials, such as foam.

4. Nuclear control rod according to claim 1, 2 or 3, in which the open pores of the interface joint have a volume equal to at least 30% of the total volume of the interface joint as produced in fabrication.

5. Nuclear control rod according to claim 4, in which the open pores of the interface joint have a volume between 30% and 95% of the total volume of the interface joint as produced in fabrication.

6. Nuclear control rod according to claim 5, in which the open pores of the interface joint have a volume between 50% and 85% of the total volume of the interface joint as produced in fabrication.

7. Nuclear control rod according to one of the previous claims, in which the thickness of the interface joint in its section transverse to the (XX') direction is more than at least 10% of the radius of the pellets.

8. Nuclear control rod according to claim 1, in which the interface joint has a volume percentage of fibres between 15 and 50%.

9. Control rod according to one of the previous claims, for a gas-cooled fast reactor (GFR), in which the basic material of the cladding is a refractory ceramic matrix composite (CMC) such as SiC-SiC_{f}, and the absorber pellets are made of B₄C.

10. Control rod according to one of the previous claims 1 to 8, for a sodium-cooled fast reactor (SFR), in which the cladding is made of a metallic material, and the absorber pellets are made of B₄C.

11. Control rod according to one of claims 1 to 8, for Pressurized Water Reactors (PWR), or Boiling Water Reactors (BWR) in which the cladding comprises a refractory ceramic matrix composite (CMC) material and the absorber pellets are made of B₄C.

12. Nuclear absorber assembly comprising a plurality of control rods according to any one of claims 1 to 11 and arranged to form a lattice.

13. Method for making a nuclear control rod, comprising the following steps:
a/ at least partially make a joint with a circular cross-section made of a material transparent to neutrons, in the form of a structure (3) with high thermal conductivity with open pores, capable of deforming under compression across its thickness;
b/ insert the at least partially produced joint into a cylindrical cladding with a circular cross-section that is open at least at one of its ends, made of material that may or may not be transparent to neutrons;
c/ insert a plurality of pellets made of boron carbide B₄C neutron absorber material over not more than the height of the joint, inside the joint inserted into the cylindrical cladding with circular cross-section;
d/ completely close the cladding once the joint has been entirely produced;
**characterized in that** step a/ is performed using the following sub-steps:
- superpose a plurality of braid layers comprising silicon carbide fibres on a plurality of layers of carbon fibre braids, themselves on a mandrel;
- compress the multilayer braid in a cylindrical mould;
- add a soluble binder into the compressed braid;
- evaporate the solvent;
according to which step b/ is performed using the mandrel around which the braid is in contact, the mandrel then being removed;
and according to which later in step c/, a heat treatment is performed under a vacuum to eliminate the binder and thus bring the joint into contact with the plurality of stacked pellets and with the cladding.

14. Production method according to claim 13, according to which the braid layers are of the two-dimensional type with a braiding angle of 45° relative to the axis of the mandrel.

15. Production method according to claim 13 or 14, according to which the carbon fibres are of the Thornel^{®} P-100 type, each containing 2000 filaments and cracked.

16. Production method according to claims 13 to 15, according to which the silicon carbide fibres are of the HI- NICALON™ type S each containing 500 filaments.

17. Production method according to one of claims 13 to 16, according to which the soluble binder is a polyvinyl alcohol.

18. Method for making a nuclear control rod, comprising the following steps:
a/ at least partially make a joint with a circular cross-section made of a material transparent to neutrons, in the form of a structure (3) with high thermal conductivity with open pores, capable of deforming under compression across its thickness;
b/ insert the at least partially produced joint into a cylindrical cladding with a circular cross-section that is open at least at one of its ends, made of material that may or may not be transparent to neutrons;
c/ insert a plurality of pellets made of boron carbide B₄C neutron absorber material over not more than the height of the joint, inside the joint inserted into the cylindrical cladding with circular cross-section;
d/ completely close the cladding once the joint has been entirely produced;
**characterized in that** step a/ is performed using the following sub-steps:
- needlebonding of carbon fibre webs in the form of a tube on a mandrel;
- performance of a heat treatment;
- compression of the heat-treated tube in a cylindrical mould;
- addition of a soluble binder into the compressed tube;
- evaporation of the solvent;
according to which step b/ is performed using the mandrel around which the braid is in contact, the mandrel then being removed;
and according to which later in step c/, a heat treatment is performed under a vacuum to eliminate the binder and thus bring the joint into contact with the plurality of stacked pellets and with the cladding.

19. Production method according to claim 18, according to which the carbon fibres are of the Thornel^{®} P-25 type.

20. Production method according to claim 18 or 19, according to which the soluble binder is a polyvinyl alcohol.

21. Method for making a nuclear control rod, comprising the following steps:
a/ at least partially make a joint with a circular cross-section made of a material transparent to neutrons, in the form of a structure (3) with high thermal conductivity with open pores, capable of deforming under compression across its thickness;
b/ insert the at least partially produced joint into a cylindrical cladding with a circular cross-section that is open at least at one of its ends, made of material that may or may not be transparent to neutrons;
c/ insert a plurality of pellets made of boron carbide B₄C neutron absorber material over not more than the height of the joint, inside the joint inserted into the cylindrical cladding with circular cross-section;
d/ completely close the cladding once the joint has been entirely produced;
**characterized in that** step a/ is performed using the following sub-steps:
- production of a carbon foam tube composed of open honeycombs;
- chemical vapour deposition (CVD) of a W-Re alloy on the carbon foam tube.
